# EUROPEAN PATENT SPECIFICATION

(11) **EP 0 900 326 B1**
(45) Date of publication and mention of the grant of the patent: **04.08.1999**
(21) Application number: 97945800.7
(22) Date of filing: 25.11.1997
(51) Int. Cl.: F02F 1/00, F02F 1/20, F02F 5/00, F16J 10/04, C23C 4/00, C23C 4/06

(54) **A CYLINDER ELEMENT, SUCH AS A CYLINDER LINER, A PISTON, A PISTON SKIRT OR A PISTON RING, IN AN INTERNAL COMBUSTION ENGINE OF THE DIESEL TYPE, AND A PISTON RING FOR SUCH AN ENGINE**
ZYLINDERBÜCHSE, KOLBEN SOWIE KOLBENRING EINES DIESELMOTORS
ELEMENT DE CYLINDRE, TEL QUE CHEMISE DE CYLINDRE, PISTON, JUPE DE PISTON OU SEGMENT DE PISTON, POUR MOTEUR A COMBUSTION INTERNE DE TYPE DIESEL ET SEGMENT DES PISTONS POUR UN TEL MOTEUR

(30) Priority: 05.12.1996 DK 138496
(43) Date of publication of application: 10.03.1999
(73) Proprietor: MAN B & W Diesel A/S, 2450 Copenhagen SV (DK)
(72) Inventor: MOCZULSKI, Lech, DK-2650 Hvidovre (DK)
(74) Representative: Indahl, Peter Jensen
(86) International application number: DK9700539
(87) International publication number: WO9825017

(56) References cited:
- WO-A-95/21994
- US-A- 4 196 237
- US-A- 4 785 775
- US-A- 5 080 056
- US-A- 5 598 818

## Description

The present invention relates to a cylinder element, such as a cylinder liner, a piston, a piston skirt, or a piston ring, for use in an internal combustion engine of the diesel type, particularly a two-stroke crosshead engine, which engine of the diesel type has a maximum combustion pressure exceeding 100 bar at full load, and in which the piston is provided with several piston rings and is moved in a reciprocating movement in a cylinder liner with a stroke of at least 600 mm, which piston rings have an external diameter of at least 150 mm in a mounted condition in annular grooves having a height in the axial direction exceeding the ring height, each piston ring having a radial outer surface sliding along the inner surface of the liner, the cylinder element being provided with at least one thermally sprayed on layer on at least part of the side of the cylinder element.

Two-stroke crosshead engines of the diesel type are today designed for operation at very high maximum combustion pressures, which generate very high loads on the cylinder elements, partly because the differential pressures across the rings necessarily become high when the rings are to prevent the pressure in the combustion chamber from spreading down below the piston, partly because the high pressure produced by the combustion is accompanied by very high temperatures having a negative effect on the tribological situation so that the cylinder elements sliding along each other are more easily exposed to seizures that can damage especially the piston rings and the liner. To seal against the high pressures, the abutment pressure of the piston rings against the inner surface of the liner has to be high. This leads to a greater tendency for the piston rings to penetrate the lubricating oil film and in places to run dry against the inner surface of the liner.

The Applicant's publication No. W095/21994 describes a cylinder liner, the inner surface of which is provided with several layers having different properties, viz., an innermost hard wearing layer, a medium-hard intermediate layer, and a softer running-in layer of another material that the harder layers. As applicable materials are proposed, for the innermost layer, a relatively soft metallic matrix comprising chromium, nickel and molybdenum with hard particles embedded in the form of carbides, oxides or nitrides. For the intermediate layer is proposed a mixture of molybdenum and preoxidized molybdenum, and for the running-in layer metal-coated graphite balls are proposed, optionally mixed with a soft material, such as silver. The use of different materials for the outermost layers of the cylinder element may cause problems of achieving sufficiently good adhesion of the layer to the subjacent material. The layer first sprayed on must adhere to the the base material of the cylinder element, which is usually cast iron, cast steel or steel, and the subsequent layer or layers must adhere to the subjacent layer, which may have properties deviating substantially from the properties of the subsequent layer. It is further a disadvantage that the materials used for the outermost layers are rather costly.

US patent No. 5 080 056 describes a four-stroke engine, the cylinder block of which is made of a 319 aluminium alloy and has several bores constituting the cylinders of the engine. The inner cylinder surfaces are provided with a hard wearing layer of an Al-bronze alloy which may be sprayed on by means of a HVOF technique to provide a completely dense and hard coating. The Al-bronze is considered to be especially suitable here because it has good sliding properties together with pistons made of aluminium. It is described as essential that the coating is dense and substantially without pores. The coating has been applied in a thickness of up to 0.1 mm, and after the application about one third of the thickness of the coating is removed by means of honing.

The high maximum pressure conditions for the engines relevant to the present invention differ substantially from the conditions in four-stroke engines where, for petrol engines, maximum pressures in the order of 40 bar are used and for diesel engines maximum pressures in the order of 80 bar. Furthermore, the engine block, pistons and piston rings of the four-stroke engines are manufactured in light metal, whereas the cylinder liners, the pistons, the piston skirts and the piston rings of the large engines are normally manufactured from cast iron, cast steel or steel to be able to withstand the large pressure and temperature influences. The differences in the materials used render it difficult to compare properties for sprayed-on coatings with each other, since the tribological conditions, the adhesion conditions, reactions to thermal influences, etc., deviate considerably between cast iron and cast steel on one hand and light metals, such as aluminium, on the other hand.

The object of the invention is to provide a cylinder element which, at lower costs of material, is provided with a coating which adheres well to the cylinder element and provides fine running-in and operational properties.

In view of this the cylinder element is sprayed with at least two layers of Al-bronze, one on top of the other, the outermost layer of which is a running-in layer having an average hardness of at the most 330 HV20, and the subjacent layer is a wearing layer having an average hardness exceeding that of the running-in layer and being at least 130 HV20.

Use of a running-in layer of an alloy of the same type as the subjacent wearing layer achieves extremely good adhesion of the running-in layer so that tearing off or scraping off of flaky pieces of the running-in layer is avoided. The surface of the Al-bronze has good sliding properties and provides good tribological conditions that counteract seizures. The soft running-in layer of Al-bronze produces a surface on the cylinder element which has no tendency towards seizures during the running-in of a new cylinder element, either in the cylinder element itself or in the surface of the element abutting and sliding along the cylinder element during the reciprocating movement of the piston.

The Al-bronze starting material used for application of the running-in layer costs about half of a graphite-containing starting material, which means that the running-in layer can be manufactured in an economically substantially more favourable manner than the known running-in layers. Furthermore, by suitable control of the application conditions, such as the composition of the carrier or protection gas used at the thermal spraying, the Al-bronze can be made more or less hard. Moreover, the hardness of the layer applied can be modified by suitable post-treatment of the layer, which is mentioned below in further detail. Thus it is possible to control the properties of the layers of Al-bronze in such a manner that the layer located below the running-in layer acts as a wearing layer proper. The material costs of such a wearing layer are also substantially lower than the costs of a wearing layer of the above type comprising molybdenum.

In case scratches are formed in the surface of the coating at the running-in of the cylinder element, the use of Al-bronze means that the scratches do not develop into seizures, which are characterized by highly increased local temperatures, because the Al-bronze has lubricating properties all the way up to its own melting temperature.

Preferably, the wearing layer of Al-bronze is an intermediate layer lying between the running-in layer and a subjacent wearing layer having a higher hardness than the intermediate layer. The subjacent wearing layer may also be of Al-bronze, or it may be of another hard and wear-resistant material, such as a material containing hard particles in the form of carbides, oxides or nitrides embedded in a metallic matrix, for example a material supplied by the Swedish firm DAROS AB under one of the commercial trade names PM2, PM10, PM14, PM20, PM28 or L1. This build-up of sprayed-on layers provides an advantageous wearing-in of the cylinder element, in which, during the wearing-in, increasingly harder materials are exposed with a higher wear resistance.

The running-in layer of Al-bronze can suitably have a porosity of from 0.2 to 40 per cent by volume, with the consequence that the surface of Al-bronze has a number of depressions produced by the pores of the material. These depressions are typically finely distributed in the surface, and at operation of the engine they catch part of the lubricating oil supplied to the surface. During the intervals when no lubricating oil is dosed to the surface from outside, the lubricating oil reserved in the depressions may be spread onto the surface and keep the cylinder element lubricated. This effect is especially advantageous on piston rings which have no lubricating oil supply of their own.

One embodiment has from two to seven layers of Al-bronze with mutually differing properties, and the thicknesses of the individual layers are in the interval from 0.02 mm to 2.5 mm, preferably from 0.10 to 1.0 mm. The use of several layers with individual layer thicknesses in said interval renders it possible to carefully adapt the properties of the coating to the application desired. A piston skirt, for example, may need a few, relatively thin layers, while the layers on a piston in the area above the uppermost piston ring may have a substantially larger thickness. On the inner surface of a cylinder liner the number of layers may be adapted so that the hardness increases evenly through the coating, and the number of layers may then be higher than on the outer surfaces of the piston rings. Each layer with substantially identical properties across the layer thickness may be built up by means of several sprayings at uniform spraying conditions until the layer has the desired thickness.

The alloy of Al-bronze may, in per cent by weight and apart from commonly occurring impurities, comprise from 2 to 20% Al and optionally one or more of the components Sb, Co, Be, Cr, Sn, Mn, Si, Cd, Zn, Fe, Ni, Pb and C in individual amounts of at the most 5% Sb, at the most 5% Co, at the most 5% Be, at the most 5% Cr, at the most 15% Sn, at the most 5% Mn, at the most 15% Si, at the most 2% Cd, at the most 15% Zn, at the most 5% Fe, at the most 20% Ni, at the most 20% Pb, at the most 2% C and the balance constituting at least 50% Cu. Thus, the minimum amount of Cu and Al is 52%, and the aggregate amount of the other components is maximum 48% and may, advantageously, be limited to 25%.

The additions of Cr, Sb and C increase the hardness of the alloy by formation of carbides, and these components are typically added in the subjacent layers acting as wearing layers.

The additions of Zn, Be, Co, Si and Ni increase the strength of the alloy and render it possible to increase the hardness of the layer by means of a mechanical influence, such as sand blasting, ball blasting or rolling.

The addition of Cd raises the recrystallization temperature of the alloy and increases its strength. The addition of Mn increases the hardness of the alloy and renders it more temperature resistant. The addition of Fe increases the hardness of the alloy, and the addition of Pb gives the layer advantageous properties at heavy loads because Pb acts as a solid lubricant. The addition of Sn improves the corrosion resistance and reduces the brittleness of the alloy and at the same time can contribute to an increase of hardness at mechanical influence.

A type of alloy especially preferred for running-in layers in particular comprises from 9 to 10% Al, from 0 to 1% Fe and the balance Cu. The hardness of this alloy is controlled primarily by the resulting content of oxides by means of the gas composition used at the spraying. By using an inactive gas, such as argon, the oxide formation is suppressed, and the alloy becomes very soft.

In an embodiment in which the oxide content of the alloy is used to control the hardnesses of the layers, the cylinder element may be formed so that the layers of Al-bronze comprise from 1 to 30 per cent by volume of oxides, and that the amount of oxides is smallest, preferably less than 10 per cent by volume, in the running-in layer, and is at least 2 per cent by volume, preferably at least 10 per cent by volume, in the wearing layer below the running-in layer. The higher content of oxides in the subjacent layer or layers provides them with a higher hardness than the running-in layer.

As an alternative or a supplement to controlling the hardnesses by means of the oxide content, the cylinder element may be formed so that the layers of Al-bronze are sprayed one on top of the other, that a sprayed-on layer is exposed to a hardness-increasing mechanical influence before the spraying-on of the subsequent layer and that preferably no roughness-reducing machining has been performed on the layer last sprayed on. Examples have been mentioned above of different mechanical influences increasing the hardness of the sprayed-on layer. By combining the type of mechanical influence with alloys containing one or more of the above components Zn, Be, Co, Si and Ni it is possible to obtain great variations in the hardnesses of the individual layers in the coating of Al-bronze. In this manner the hardnesses may, for example, be varied within the interval between 50 and 500 HV20.

It is a special advantage of the cylinder element that the layer last sprayed on needs no finishing, such as honing, which is costly to perform on the large cylinder elements according to the invention.

The invention further relates to a piston ring for use in an internal combustion engine of the diesel type, especially a two-stroke crosshead engine, which engine of the diesel type has a maximum combustion pressure exceeding 100 bar at full load, and in which the piston is provided with several piston rings and is moved in a reciprocating movement in a cylinder liner with a stroke of at least 750 mm, which piston rings have an external diameter of at least 150 mm in a mounted condition in annular grooves having a height in the axial direction exceeding the ring height, each piston ring having a radial outer surface, in use sliding along the inner surface of the liner, which piston ring is provided with at least one thermally sprayed on layer on its radial outer surface.

With a view to producing a piston ring which is provided, at advantageously low material costs, with a coating which adheres well to the cylinder element and yields fine running-in and operating properties, the piston ring according to the invention is characterized in that the at least one layer sprayed on is of Al-bronze, that the aggregate thickness of the coating of Al-bronze is at least 0.05 mm, and that the outermost layer is a running-in layer with an average hardness of at the most 330 HV20. On piston rings, the coating of Al-bronze may be a single or several layers which is or are sprayed directly on to the base material of steel, casting steel or cast iron of the piston ring, or which is or are sprayed on to a subjacent sprayed-on layer of another wear-resistant material, which may, for example, be one of the Daros types PM2, PM10, PM14, PM20, PM28 or L1. The outermost layer of Al-bronze acts as a seizure-preventing running-in layer which renders possible the rapid running-in of new piston rings, which will be explained in detail below.

During the initial running-in of the piston rings the radial outer surfaces of the rings are ground into a facetted shape. Because the ring grooves have a height exceeding the height of the rings, the latter can be moved axially in their respective annular grooves, and under the influence of the large pressure differences across the rings, the rings will tilt or be twisted slightly in the grooves so that the outer surfaces of the rings form a varying angle with the inner surface of the liner during the reciprocating movement of the piston. The first many times that the rings tilt, their upper or lower edges will abut the inner surface of the liner with a very small area and a pertaining extremely high surface pressure resulting in rapid wearing away of the ring material, presumably because the ring edges momentaneously penetrate through the oil film on the inner surface of the liner. As the rings attain the facetted shape, the abutment area is increased, and the surface pressure reduced to below the limit where the oil film is penetrated.

The running-in layer of Al-bronze prevents the occurrence of seizures, at least until the piston ring has been ground into the facetted shape which permits full loading of the piston ring without penetration of the lubricating oil film between the outer surface of the piston ring and the inner surface of the liner.

In case only a single layer of Al-bronze is used on the piston ring, the hardness of this outermost layer may be increased within said average hardness of at the most 330 HV20 by means of mechanical influence as described above in connection with cylinder elements provided with several layers of Al-bronze with mutually differing properties.

Examples of the invention will now be explained in further detail below with reference to the highly schematic drawings, in which
Fig. 1 shows a longitudinal sectional view through the uppermost part of a cylinder liner in which a piston with piston rings is at its upper dead centre,
Fig. 2 shows a cross-sectional view through a piston ring on which a running-in layer of Al-bronze has been applied directly on the cast ring material,
Fig. 3 is a cross-sectional view through another embodiment of a piston ring on which a running-in layer of Al-bronze has been applied on top of a hard wearing layer sprayed on to the cast ring material,
Fig. 4 is a segmental lateral view of a piston with a piston skirt, both formed with a layer of Al-bronze according to the invention, and
Fig. 5 is a segmental cross-sectional view of a cylinder liner on which three layers of Al-bronze have been applied.

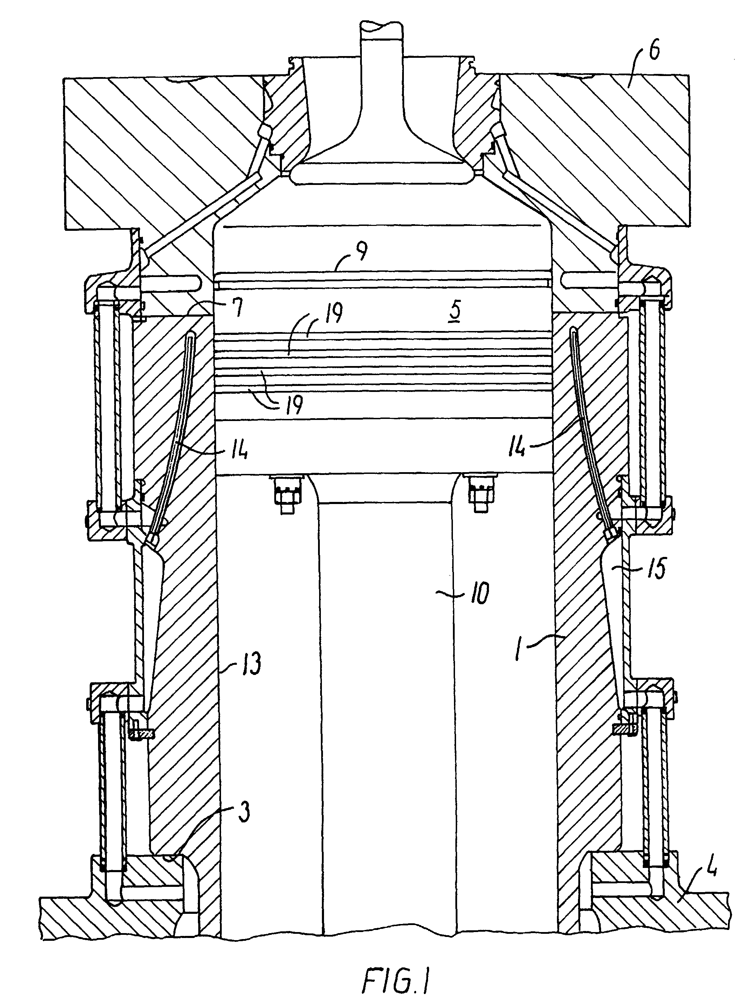

Fig. 1 shows the uppermost section of a cylinder liner generally designated 1 for a large two-stroke crosshead engine that can be used as a stationary engine for operation of a power generator, or as the propulsion engine of a ship. Depending on the engine size the cylinder liner may be manufactured in many different sizes with cylinder bores typically being in the interval from 250 mm to 1000 mm and corresponding typical lengths being in the interval from 1000 mm to 4500 mm. It is, however, also possible to use the invention in connection with two-stroke crosshead engines in which the cylinder bore is in the interval from 150 to 250 mm, and in this case the liner may have a length of down to 500 mm. The liner is normally made of cast iron or of steel or cast steel which is provided with a sprayed-on wearing layer on the inner surface of the liner, and it may be integral or divided into two parts joined in extension of each other. It is also possible in case of the divided liner to manufacture the upper part from another base material than the lower part.

In a well-known manner the liner is mounted in the engine, only partially shown, by an annular downward face 3 being positioned on the top plate 4 in the engine frame box or cylinder block, whereupon a piston 5 is mounted in the cylinder liner, and a cylinder cover 6 is arranged on top of the liner on its annular upward face 7 and clamped on to the top plate by means of cover studs, not shown.

The lower part of the cylinder liner has an annular row of scavenge air ports, not shown. The piston is movable in the longitudinal direction of the liner between a top dead centre at which the upper piston surface 9 is located in a bore in the cylinder cover 6, and a bottom dead centre at which the upper piston surface 9 is located directly below the lower end of the scavenge air ports.

Through a piston rod 10, a crosshead and a connecting rod the piston is connected with the engine crankshaft in a well-known manner. For each time that the crankshaft performs a rotation of 360°, the piston is moved from the bottom dead centre to the top dead centre and back again.

In the upper section located between the faces 3 and 7, the cylinder liner is formed with a larger external diameter, and at the top of this section many elongated cooling bores 14 are bored into the liner wall from an external recess 15 so that the longitudinal axes of the straight cooling bores extend obliquely or askew in relation to the longitudinal axis of the liner.

The inner surface 13 of the cylinder liner may be provided with one or more thermally sprayed-on hard wearing layers which may be of Al-bronze exclusively or a number of layers of Al-bronze supplemented with one or more harder, subjacent wearing layers of ceramics, a mixture of ceramics and metal, so-called cermet, or wearing layers consisting of very hard particles embedded in a relatively soft metallic matrix. The matrix may, for example, include Cr, Ni and/or Mo, and the hard particles may, for example, be carbides, nitrides, borides and/or oxides. The cylinder liner may be manufactured with a wave-shaped pattern on its inner surface where the wave tops in the pattern have been removed. It is possible to manufacture the liner with the pattern in question along the entire inner surface. The pattern may also be machined only in an upper part of the liner, such as the section swept by the piston rings in the first 40% of the downward piston stroke. The part may also have other relative sizes, such as 20%, 25%, 30% or 35% or intermediate values. The wave-shaped pattern helps to maintain the best possible lubrication conditions between the piston rings and the inner surface of the liner, since lubricating oil may collect in the bottom of the wave troughs and provide the plateau areas between the wave troughs with lubricating oil. When new piston rings are run in in a liner, the outer surfaces of the piston rings slide on the approximately plane plateau areas.

In Fig. 1, the piston 5 is shown in its top dead centre. The piston is provided with four piston rings generally designated 19, of which the upper piston ring is a standard oblique cut ring or is of a gastight type, viz., the gap of the ring is formed so that gas is substantially prevented from flowing through the ring partition. This may be effected, for example, by one end of the ring having a flat projection passing into a corresponding recess at the other end of the ring. The second and the third piston rings from the top and the bottom piston ring may be conventional oblique cut rings, in which the ring partition is formed like a gap extending obliquely in the circumferential direction from the upper to the lower ring surface or may be of the approximately gastight type.

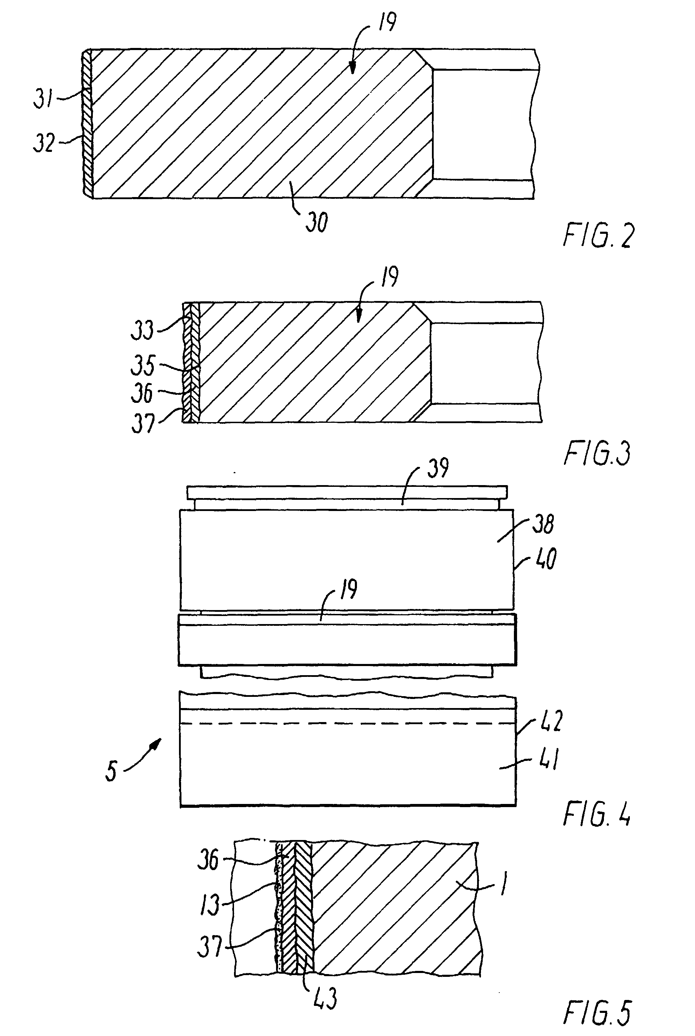

The piston ring 19 in Fig. 2 comprises a cast piston ring body 30 of cast iron, cast steel or steel. The radial outer surface 31 of the ring body has been provided with a running-in layer 32 of Al-bronze in a thickness of at least 0.05 mm, preferably at least 0.14 mm, by means of thermal spraying. The piston ring 19 in Fig. 3 comprises a cast piston ring body 34 of steel or cast steel. Since the body is not made of cast iron, it is necessary, on the radial outer steel surface 35, to apply a wearing layer 36 of a material having satisfactory sliding properties against the inner surface of the cylinder liner, such as one or more wearing layers of Al-bronze and/or a wearing layer of the above materials PM2, PM10, PM14, PM20, PM28 or L1. On the radial outer surface 33 of the wearing layer, a running-in layer 37 of Al-bronze has been applied in a thickness of at least 0.05 mm by means of thermal spraying. The running-in layers on the piston rings may also have a larger thickness, such as a thickness in the interval from 0.1 to 3.0 mm, preferably at the most 2.00 mm.

Fig. 4 shows a segment of the piston 5, omitting the middle piston section. On the radial outer surface of the piston, in an upper section 38, which extends from the annular groove of the uppermost piston ring up to a groove 39 for mounting of a piston lifting tool, a soft layer 40 of Al-bronze has been applied by means of thermal spraying in a thickness of from 0.05 to 5 mm, preferably at least 0.4 mm. The outermost part of this layer functions as running-in layer, and the layer may be of the same composition as the running-in layers used for the piston rings.

A piston skirt 41 is bolted on to the lower surface of the piston. The outer surface of the piston skirt is provided with a running-in layer 42 of Al-bronze in a thickness of at least 0.05 mm, preferably at least 0.14 mm, by means of thermal spraying. Below this running-in layer, there may be one or more wearing layers of Al-bronze.

Fig. 5 shows a segment of a cylinder liner 1 provided with an innermost, relatively hard wearing layer 43 of Al-bronze lying under the intermediate wearing layer 36 of Al-bronze and the outermost running-in layer 37 of Al-bronze.

It is very well-known to spray layers of material on to round bodies by means of thermal spraying. This may be, for example, flame spraying, plasma spraying, HVOF spraying or arc spraying. Spraying methods are described, for example, in EP-B 0 341 672, EP-A 0 203 556, WO95/02023 and in W095/21994. In principle, the spraying is performed in the same manner for the various cylinder elements, the spraying equipment and the cylinder element being made to rotate mutually, whereupon the spraying is initiated and continues at uniform spraying conditions and repeated passages across the surface of the cylinder element until the layer sprayed on has been built up to the desired thickness. When the next layer is to be sprayed on, the procedure is repeated with the spraying conditions imparting the desired properties to the layer. A specific example will now be given of the spraying on a cylinder element.

### Example 1

A cylinder liner having an internal diameter of 600 mm was provided with a layer of Al-bronze on its inner surface by means of a standard plasma spraying apparatus of the make METCO. The distance between the spraying head and the inner surface of the liner was 115 mm, and a current intensity of 500 A was used. The mutual rotation between the spraying head and the liner was set at 27 rpm, and the feed in the longitudinal direction of the liner was set at 7 mm per revolution. Powdery starting material of the alloy 9% Al, 1% Fe and the balance of Cu was supplied in an amount of 95 g per minute, which deposited a layer of 0.02 mm per passage of the inner surface. Nitrogen was used as the carrier gas. The layer was built up to a thickness of 0.1 mm.
Then the layer was rolled by means of a rolling tool. After the rolling, the average hardness of the layer was measured to be 360 HV20. Then a second layer was sprayed on using the same process conditions. This layer was sand-blasted, whereupon the average hardness of the layer was measured to be 320 HV20. Then a third layer was sprayed on using the same process conditions. This layer was ball blasted with small steel balls, whereupon the average hardness of the layer was measured to be 280 HV20. Finally, a running-in layer was sprayed on, receiving no post-treatment. The average hardness of this layer was measured to be 180 HV20.

The liner was then mounted in an engine and was run in together with a piston with a set of standard piston rings. The engine had a normal maximum combustion pressure of 145 bar. After half an hour's initial running at a 15% load, the load was increased to 100% during 15 minutes whereupon operation continued for one hour, the engine was stopped, and the cylinder liner was inspected. No signs of actual seizures were observable on the inner surface of the cylinder liner.

### Example 2:

Four piston rings of cast iron and having an external diameter of just below 600 mm were set up beside each other and were provided with an Al-bronze coating by means of a spraying apparatus of the same type as was used in Example 1 and using the same spraying conditions, nitrogen being used as the carrier gas. The layer of Al-bronze was built up to a thickness of about 0.15 mm, whereupon the sprayed-on coating was sand-blasted. The average hardness of the layer was measured to be 315 HV20. The piston rings were separated and without further post-treatment were mounted on a piston in a standard cylinder liner in the same engine as was used in Example 1. The running-in was performed in the same manner as mentioned in Example 1, only with 1.5 hours' operation at 100%. At the inspection after the running-in it could be ascertained that the piston rings showed no signs of seizures and that the thickness of the running-in layer was reduced to average 0.08 mm. Ground-in facets could also be observed in the outer surfaces of the piston rings, which indicates that the continued operation with the piston rings can take place without formation of seizures.

If more hardness-increasing oxides are desired in the Al-bronze, compressor air, i.e., compressed atmospheric air, can be used as a carrier gas at the spraying instead of nitrogen. If it is desired to limit the amount of oxides as much as possible, either because the layer is to be soft or because it is desired to cause the hardness mainly by means of deformation hardening alloying components, an inactive carrier gas can be used, such as argon.

As mentioned above, a large number of different layers of Al-bronze can be applied to the cylinder element. Preferably, the layers have increasing hardness in a direction away from the outer surface of the cylinder element, and the average hardness rises by at least 20 HV20 from layer to layer. In the innermost layers with the highest hardness, the hardness can be produced fully or partially by means of addition of hardness-increasing alloying components to the Al-bronze combined with mechanical processing of the layers. If it is desired to have the outermost running-in layer very soft, such as with an average hardness in the interval from 50 to 120 HV20, this may be done by using argon as the carrier gas and omitting the addition of hardness-increasing alloying components, possibly combined with a spraying that provides a layer of relatively high porosity, such as more than 20 per cent by volume. The porosity contributes to giving the layer a soft character because it can yield to hard local loads.

The thickness of the wearing layers, particularly of the deepest-lying, hardest wearing layer, is selected on the basis of the expected life of the cylinder element, the thickness being selected to be suitably larger than the highest expected wearing down of the layer during the life of the cylinder element. This especially applies to the cylinder liner, the piston and the piston skirt, and to the piston rings if their base material is not cast iron. If the base material of the piston rings is cast iron, it is acceptable, but not especially desirable that the whole wearing layer is worn away during the life. The aggregate wearing coating can thus have thickness of, for example, 2 or 3 mm.

## Claims

1. A cylinder element, such as a cylinder liner (1), a piston (5), a piston skirt (41), or a piston ring (19), for use in an internal combustion engine of the diesel type, particularly a two-stroke crosshead engine, which engine of the diesel type has a maximum combustion pressure exceeding 100 bar at full load, and in which the piston is provided with several piston rings and is moved in a reciprocating movement in a cylinder liner with a stroke of at least 600 mm, which piston rings have an external diameter of at least 150 mm in a mounted condition in annular grooves having a height in the axial direction exceeding the ring height, each piston ring having a radial outer surface sliding along the inner surface (13) of the liner, the cylinder element being provided with at least one thermally sprayed on layer on at least part of the side of the cylinder element,**characterized** in that the cylinder element (1, 5, 19, 41) is sprayed with at least two layers of Al-bronze, the outermost layer of which is a running-in layer (37) having an average hardness of at the most 330 HV20, and the subjacent layer (36) is a wearing layer having an average hardness exceeding that of the running-in layer and being at least 130 HV20.

2. A cylinder element according to claim 1, **characterized** in that the wearing layer of Al-bronze is an intermediate layer (36) lying between the running-in layer (37) and a subjacent wearing layer (43) having a higher hardness than the intermediate layer.

3. A cylinder element according to claim 1 or 2, **characterized** in that the running-in layer (37) of Al-bronze has a porosity of from 0.2 to 40 per cent by volume.

4. A cylinder element according to any one of claims 1-3, **characterized** in that there are from two to seven layers of Al-bronze with mutually differing properties, and that the thicknesses of the individual layers are in the interval from 0.02 mm to 2.5 mm, preferably from 0.10 to 1.0 mm.

5. A cylinder element according to any one of claims 1-4, **characterized** in that the alloy of Al-bronze, stated in per cent by weight and apart from commonly occurring impurities, comprises from 2 to 20% Al and optionally one or more of the components Sb, Co, Be, Cr, Sn, Mn, Si, Cd, Zn, Fe, Ni, Pb and C in individual amounts of at the most 5% Sb, at the most 5% Co, at the most 5% Be, at the most 5% Cr, at the most 15% Sn, at the most 5% Mn, at the most 15% Si, at the most 2% Cd, at the most 15% Zn, at the most 5% Fe, at the most 20% Ni, at the most 20% Pb, at the most 2% C and the balance constituting at least 50% Cu.

6. A cylinder element according to claim 5, **characterized** in that the alloy comprises from 9 to 10% Al, from 0 to 1% Fe and the balance Cu.

7. A cylinder element according to any one of the preceding claims,**characterized** in that the layers of Al-bronze comprise from 1 to 30 per cent by volume of oxides, and that the amount of oxides is smallest, preferably less than 10 per cent by volume, in the running-in layer (37), and is at least 2 per cent by volume, preferably at least 10 per cent by volume, in the wearing layer below the running-in layer.

8. A cylinder element according to any one of the preceding claims, **characterized** in that the layers of Al-bronze are sprayed one on top of the other, that a sprayed-on layer is exposed to a hardness-increasing mechanical influence before the spraying-on of the subsequent layer, and that preferably no roughness-reducing machining has been performed on the layer last sprayed on.

9. A piston ring (19) for use in an internal combustion engine of the diesel type, especially a two> stroke crosshead engine, which engine of the diesel type has a maximum combustion pressure at full load exceeding 100 bar, and in which the piston (5) is provided with several piston rings and is moved in a reciprocating movement in a cylinder liner (1) with a stroke of at least 750 mm, which piston rings have an external diameter of at least 150 mm in a mounted condition in annular grooves having a height in the axial direction exceeding the ring height, each piston ring having a radial outer surface, in use sliding along the inner surface (13) of the liner, which piston ring is provided with at least one thermally sprayed on layer on its radial outer surface, **characterized** in that the at least one layer sprayed on (32) is of Al-bronze, that the aggregate thickness of the coating of Al-bronze is at least 0.05 mm, and that the outermost layer is a running-in layer with an average hardness of at the most 330 HV20.

10. A piston ring according to claim 9, **characterized** in that the hardness of the outermost layer (32) is increased within said average hardness of at the most 330 HV20 by means of mechanical influence.

## Patentansprüche

1. Zylinderelement, wie Zylinderbüchse (1), Kolben (2), Kolbenhemd (41) oder Kolbenring (19) für einen Dieselmotor, insbesondere einen Zweitakt-Kreuzkopfmotor, der bei Volllast einen maximalen Verbrennungsdruck von über 100 bar aufweist und bei dem der Kolben mit mehreren Kolbenringen versehen ist und in einer Zylinderbüchse mit einem Hub von mindestens 600 mm hin- und hergehend bewegt wird, wobei die Kolbenringe in einem in Ringnuten mit einer in axialer Richtung über die Kolbenringstärke hinausgehenden Höhe montierten Zustand einen Außendurchmesser von mindestens 150 mm aufweisen, wobei jeder Kolbenring eine radial äußere Oberfläche aufweist, die an der Innenoberfläche (13) der Zylinderbüchse entlanggleitet, und wobei das Zylinderelement an wenigstens einem Teil seiner Seite mit wenigstens einer thermisch aufgesprühten Beschichtung versehen ist, **dadurch gekennzeichnet, dass** das Zylinderelement (1,5,19,41) mit wenigstens zwei aufgesprühten, aus Al-Bronze bestehenden Beschichtungslagen versehen ist, von denen die äußerste Schicht eine Einlaufschicht (37) mit einer durchschnittlichen Härte von höchstens 330 HV20, und die darunterliegende Schicht (36) eine Tragschicht bildet, deren durchschnittliche Härte größer als die Härte der Einlaufschicht ist und mindestens 130 HV20 beträgt.

2. Zylinderelement nach Anspruch 1, **dadurch gekennzeichnet, dass** die aus Al-Bronze bestehende Tragschicht als Zwischenschicht (36) ausgebildet ist, die zwischen der Einlaufschicht (37) und einer darunterliegenden Tragschicht (43) angeordnet ist, welche eine größere Härte als die Zwischenschicht aufweist.

3. Zylinderelement nach Anspruch 1 oder 2, **dadurch gekennzeichnet, dass** die aus Al-Bronze bestehende Einlaufschicht (37) eine Porosität von 0,2 bis 40 Vol.-% aufweist.

4. Zylinderelement nach einem der vorhergehenden Ansprüche 1 bis 3, **dadurch gekennzeichnet, dass** zwei bis sieben Beschichtungslagen aus Al-Bronze mit gegenseitig differierenden Eigenschaften vorgesehen sind und dass die Dicke der einzelnen Beschichtungslagen im Bereich von 0,02 mm bis 2,5 mm, vorzugsweise von 0,1 mm bis 1,0 mm liegt.

5. Zylinderelement nach einem der vorhergehenden Ansprüche 1 bis 4, **dadurch gekennzeichnet, dass** die Legierung der Al-Bronze angegeben in Gewichtsprozent und abgesehen von den üblicher Weise auftretenden Verunreinigungen 2% bis 20% Al und optional eine oder mehrere der Komponenten Sb, Co, Be, Cr, Sn, Mn, Si, Cd, Zn, Fe, Ni, Pb und C in individuellen Mengen von höchstens 5% Sb, höchstens 5% Co, höchstens 5% Be, höchstens 5% Cr, höchstens 15% Sn, höchstens 5% Mn, höchstens 15% Si, höchstens 2% Cd, höchstens 15% Zn, höchstens 5% Fe, höchstens 20% Ni, höchstens 20% Pb, höchstens 2% C und einen Rest mit mindestens 50% Cu als Rest enthält.

6. Zylinderelement nach Anspruch 5, **dadurch gekennzeichnet, dass** die Legierung 9% bis 10% Al, 0% bis 1% Fe und Rest Cu enthält.

7. Zylinderelement nach einem der vorhergehenden Ansprüche, **dadurch gekennzeichnet, dass** die Al-Bronze-Schichten 1 bis 30 Vol.-% Oxide enthalten, dass der Oxidanteil in der Einlaufschicht (37) am kleinsten ist, vorzugsweise weniger als 10 Vol.-% beträgt, und dass der Oxidanteil in der Tragschicht unterhalb der Einlaufschicht zumindest 2 Vol.%, vorzugsweise zumindest 10 Vol.-% beträgt.

8. Zylinderelement nach einem der vorhergehenden Ansprüche, **dadurch gekennzeichnet, dass** die Al-Bronze-Schichten aufeinander aufgesprüht werden, dass eine jeweils aufgesprühte Schicht einem mechanischen Einfluss zur Härte steigerung ausgesetzt wird und dass vorzugsweise die zuletzt aufgesprühte Schicht keiner die Rauhigkeit reduzierenden Bearbeitung unterzogen wird.

9. Kolbenring (13) für einen Dieselmotor, insbesondere einen Zweitakt-Kreuzkopfmotor, der bei Volllast einen maximalen Verbrennungsdruck von mehr als 100 bar aufweist und bei dem der Kolben mit mehreren Kolbenringen versehen ist und in einer Zylinderbüchse mit einem Hub von mindestens 600 mm hin- und hergehend bewegt wird, wobei die Kolbenringe in einem in Ringnuten, mit einer in axialer Richtung über die Kolbenringstärke hinausgehenden Höhe montierten Zustand einen Außendurchmesser von mindestens 150 mm aufweisen, wobei jeder Kolbenring eine radial äußere Oberfläche aufweist, die im Betrieb an der Innenoberfläche (13) der Zylinderbüchse entlangleitet und wobei der Kolbenring an seiner radial äußeren Oberfläche mit wenigstens einer thermisch aufgesprühten Beschichtung versehen ist, **dadurch gekennzeichnet, dass** die wenigstens eine, aufgesprühte Beschichtung (32) aus Al-Bronze besteht, dass die Gesamtdicke der aus Al-Bronze bestehenden Beschichtung mindestens 0,05 mm beträgt und dass die äußerste Schicht eine Einlaufschicht mit einer durchschnittlichen Härte von höchstens 330 HV20 ist.

10. Kolbenring nach Anspruch 9, **dadurch gekennzeichnet, dass** die Härte der äußersten Schicht (32) innerhalb des genannten mittleren Härtebereichs von höchstens 330 HV20 auf mechanische Weise erhöht ist.

## Revendications

1. Élément cylindrique, comme par exemple un chemisage de cylindre (1), un piston (5), une chemise de piston (41), ou bien un segment de piston (19), destiné à être utilisé dans un moteur à combustion interne du type diesel, en particulier un moteur à deux temps à crosse, ledit moteur du type diesel présentant une pression de combustion maximum qui dépasse 100 bars à pleine charge, et dans lequel le piston est équipé de plusieurs segments de piston et se déplace en mouvement en va-et-vient dans un chemisage de cylindre avec une course d'au moins 600mm, lesdits segments de piston ayant un diamètre externe d'au moins 150 mm dans une condition montée dans des gorges annulaires ayant une hauteur dans la direction axiale qui dépasse la hauteur des segments, chaque segment de piston présentant une surface- extérieure radiale en coulissement le long de la surface intérieure (13) du chemisage, l'élément cylindrique étant pourvu d'au moins une couche appliquée par pulvérisation thermique sur au moins une partie du côté de l'élément cylindrique, caractérisé en ce que l'élément cylindrique (1, 5, 19, 41) est revêtu par pulvérisation d'au moins deux couches de bronze à l'aluminium, la couche la plus extérieure étant une couche de rodage (37) présentant une dureté moyenne au maximum de 330 HV 20, et la couche sous-jacente (36) étant une couche d'usure ayant une dureté moyenne dépassant celle de la couche de rodage et au moins égale à 130 HV 20.

2. Élément cylindrique selon la revendication 1, caractérisé en ce que la couche d'usure de bronze à l'aluminium est une couche intermédiaire (36) située entre la couche de rodage (37) et une couche d'usure sous-jacente (43) ayant une dureté supérieure à la couche intermédiaire.

3. Élément cylindrique selon l'une ou l'autre des revendications 1 et 2, caractérisé en ce que la couche de rodage (37) de bonze à l'aluminium présente une porosité comprise entre 0,2 et 40% en volume.

4. Élément cylindrique selon l'une quelconque des revendications 1 à 3, caractérisé en ce qu'il est prévu entre deux et sept couches de bronze à l'aluminium avec des propriétés mutuellement différentes, et en ce que les épaisseurs des couches individuelles sont dans la plage de 0,02 à 2,5 mm, de préférence entre 0,10 et 1,0 mm.

5. Élément cylindrique selon l'une quelconque des revendications 1 à 4, caractérisé en ce que l'alliage de bronze à l'aluminium, exprimé en pourcentage en poids, et en plus des impuretés habituellement présentes, comprend de 2 à 20% d'aluminium et en option un ou plusieurs des composants Sb, Co, Be, Cr, Sn, Mn, Si, Cd, Zn, Fe, Ni, Pb et C en quantités individuelles égales au maximum à 5% Sb, au maximum 5% Co, au maximum 5% Be, au maximum 5% Cr, au maximum 15% Sn, au maximum 5% M n, au maximum 15% Si, au maximum 2% Cd, au maximum 15% Zn, au maximum 5% Fe, au maximum 20% Ni, au maximum 20% Pb, au maximum 2% C, et le reste étant constitué par au moins 50% Cu.

6. Élément cylindrique selon la revendication 5, caractérisé en ce que l'alliage comprend de 9 à 10% d'aluminium, de 0 à 1% de fer, le reste étant du cuivre.

7. Élément cylindrique selon l'une quelconque des revendications précédentes, caractérisé en ce que les couches de bronze à l'aluminium comprennent de 1 à 30% en volume d'oxydes, et en ce que la quantité des oxydes est la plus faible, de préférence inférieure à 10% en volume, dans la couche de rodage (37), et en ce qu'elle est d'au moins 2% en volume, de préférence d'au moins 10% en volume, dans la couche d'usure au-dessous de la couche de rodage.

8. Élément cylindrique selon l'une quelconque des revendications précédentes, caractérisé en ce que les couches de bronze à l'aluminium sont pulvérisées les unes sur les autres, en ce qu'une couche qui vient d'être pulvérisée est exposée à un traitement mécanique pour accroître sa dureté avant la pulvérisation de la couche successive, et en ce que de préférence aucun usinage de réduction de rugosité n'a été exécuté sur la dernière couche pulvérisée.

9. Segment de piston (19) destiné à être utilisé dans un moteur à combustion interne du type diesel, spécialement dans un moteur à deux temps à crosse, ledit moteur du type diesel ayant une pression de combustion maximum à pleine charge qui dépasse 100 bars, et dans lequel le piston (5) est équipé de plusieurs segments de piston et se déplace en un mouvement de va-et-vient dans un chemisage de cylindre (1) sur une course d'au moins 750 mm, lesdits segments de piston ayant un diamètre externe d'au moins 150 mm dans une condition montée dans des gorges annulaires ayant une hauteur dans la direction axiale qui dépasse la hauteur des segments, chaque segment de piston ayant une surface extérieure radiale, qui coulisse en utilisation le long de la surface intérieure (13) du chemisage, ledit segment de piston étant pourvu d'au moins une couche appliquée par pulvérisation thermique sur sa surface extérieure radiale, caractérisé en ce que ladite au moins une couche pulvérisée (32) est en bronze à l'aluminium, et en ce que l'épaisseur totale du revêtement de bronze à l'aluminium est d'au moins 0,05 mm, et en ce que la couche la plus extérieure est une couche de rodage avec une dureté moyenne au maximum égale à 330 HV 20.

10. Segment de piston selon la revendication 9, caractérisé en ce que la dureté de la couche la plus extérieure (32) est augmentée par traitement mécanique à l'intérieur de cette dureté moyenne égale au maximum à 330 HV 20.
